(19) Europäisches Patentamt
European Patent Office
Office européen des brevets

(11) **EP 3 545 190 B1**

(12) **EUROPEAN PATENT SPECIFICATION**

(45) Date of publication and mention
of the grant of the patent:
**02.10.2024 Bulletin 2024/40**

(21) Application number: **17800382.8**

(22) Date of filing: **13.11.2017**

(51) International Patent Classification (IPC):
**F03D 7/04** (2006.01)    **F03D 7/02** (2006.01)
**H02J 3/38** (2006.01)

(52) Cooperative Patent Classification (CPC):
**F03D 7/048; F03D 7/0284; H02J 3/381; H02J 3/46;
H02J 3/48;** F05B 2270/337; H02J 2300/28;
Y02E 10/72; Y02E 10/76

(86) International application number:
**PCT/DK2017/050371**

(87) International publication number:
**WO 2018/095493 (31.05.2018 Gazette 2018/22)**

(54) **A METHOD OF CONTROLLING A WIND TURBINE, A CONTROLLER FOR A WIND TURBINE AND
A WIND TURBINE**

VERFAHREN ZUR STEUERUNG EINER WINDTURBINE, STEUERGERÄT FÜR EINE
WINDTURBINE SOWIE WINDTURBINE

PROCÉDÉ DE COMMANDE D'UNE ÉOLIENNE, DISPOSITIF DE COMMANDE POUR UNE
ÉOLIENNE ET ÉOLIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.11.2016 DK PA201670939**

(43) Date of publication of application:
**02.10.2019 Bulletin 2019/40**

(73) Proprietor: **Vestas Wind Systems A/S
8200 Aarhus N (DK)**

(72) Inventors:
• **ØSTERGAARD, Kasper Zinck**
**8762 Flemming (DK)**
• **MONJO, Gustavo**
**Santiago 7770237 (CL)**
• **KJÆR, Martin Ansbjerg**
**8462 Harlev J (DK)**

(74) Representative: **Vestas Patents Department
Hedeager 42
8200 Aarhus N (DK)**

(56) References cited:
EP-A1- 1 467 463        EP-A1- 2 884 096
EP-A2- 2 082 132        EP-B1- 2 082 132
US-A1- 2011 012 352     US-A1- 2011 031 748
US-A1- 2013 187 385

• BACCINO FRANCESCO ET AL: "An Optimal
Model-Based Control Technique to Improve Wind
Farm Participation to Frequency Regulation",
IEEE TRANSACTIONS ON SUSTAINABLE
ENERGY, IEEE, USA, vol. 6, no. 3, 1 July 2015
(2015-07-01), pages 993 - 1003, XP011584826,
ISSN: 1949-3029, [retrieved on 20150617], DOI:
10.1109/TSTE.2014.2327243

## Description

The invention relates to a wind turbine controller, a method for controlling a wind turbine and a cluster of wind turbines connected to a utility grid.

A utility grid connects a number of power generators and consumers. The utility grid seeks to maintain a rated frequency, e.g. of 50 or 60 Hz when the generated power balance the consumed power.

The frequency of the utility grid may rise if the consumed power suddenly drops and creates an unbalance between the generated and consumed power. Deviation from the rated frequency may potentially affect the function of electrical equipment connected to the utility grid and is therefore undesired.

To re-establish balance in the utility grid, the consumption or the production may be amended. An increased frequency may be counteracted by reduced production.

In wind turbine power production, the balance is generally established by disconnecting one or more turbines from the utility grid.

Examples of prior art can be found in EP 2 082 132 81, EP 2 884 096 A1 and US 2011/012352 A1.

It is an object of the invention to improve the interaction between wind turbines and the utility grid, particularly to maintain the rated frequency.

Accordingly, in a first aspect, a method according to claim 1 is provided for controlling individually wind turbines in a cluster of wind turbines, where each wind turbine of the cluster of wind turbines is configured to deliver power to the same utility grid having a rated frequency, the method comprising the steps of:

- providing at a first point in time, t1, a first reduction by which delivery from a first wind turbine in the cluster of wind turbines is reduced from a present power level to a first reduced power level, the first reduction being provided in response to an initial frequency of the utility grid exceeding a first threshold value; and
- continuing delivering power from the first wind turbine at the first reduced power level while the initial frequency exceeds the first threshold value.

In a second aspect, a wind turbine controller configured to control a wind turbine in a cluster of wind turbines is provided, the controller being configured to control in accordance with the method of the first aspect.

In a third aspect, a wind turbine with a controller according to the second aspect is provided.

Since the first wind turbine is allowed to continue in operation by delivering power at the fist reduced power level while the initial frequency exceeds the first threshold value, the control becomes very fast and the ability to counteract unbalance is improved. Particularly it is an advantage that the wind turbine operation for the first wind turbine is not completely terminated whereby the turbine can quickly return to normal operation when the frequency of the grid is recovered. This is advantageous compared to shutting down turbines which requires a slow start up procedure.

As a further advantage, the continued operation potentially reduces stress and wear on the wind turbine compared to a complete shut down.

Particularly, the reduction provides a reduced power level which is not dependent of the grid frequency. The grid frequency specifies when to provide the reduction but not necessarily to which level the reduction reduces the power. Particularly, the levels to which the power is reduced may be fixed levels or optionally levels depending on wind speed, but not on frequency.

The cluster may e.g. be a wind park, a part of a wind park, or several wind parks with a plurality of wind turbines located close to each other, or the cluster may be a plurality of wind turbines spread widely in a utility grid. The method may include the step of continuously surveying the utility grid. The surveying could be located directly at the point where the wind turbine(s) connect to the utility grid or it could be distant from the wind turbine(s).

The surveying establishes the change in frequency. Once the frequency reaches a first threshold, the first reduction is provided for the first wind turbine.

In one example, the rated frequency is 50 Hz, the first threshold is 51 Hz, the present power level is 2 MW, e.g. corresponding t a rated power level for the wind turbine, and the first reduced power level is 1 MW. In this example, the first reduction reduces the delivery from 2 MW to 1 MW upon reaching a frequency of 51 Hz. The first reduction counteracts the imbalance and depending on the consumption, the first reduction may have the impact that the frequency is lowered.

Once the first reduction is provided, the first wind turbine continues to deliver power at the first reduced level. This situation may continue e.g. until the grid frequency reverts to a satisfactory level, e.g. until it passes a reinstating level which is typically lower than the first threshold value thereby creating a hysteresis ensuring a stable control. The hysteresis may e.g. be in the range of 0.2-1 pct. of the rated frequency, which for a 50 Hz grid frequency means that the reinstating level is 0.1-0.5 Hz lower than the threshold.

The method further comprises the step of providing, at a second point in time, t2, a second reduction by which delivery from a second wind turbine in the cluster of wind turbines is reduced from a present power level to a second reduced power level. t2 is later than t1, and the second reduction is thereby shifted in time relative to the first reduction. Due to the shift in time, the first and second wind turbines are de-rated at different points in time, and the impact in the utility grid becomes smoother. This again enables a more precise and dampened control system with less fluctuations and distortion and a faster reacting control for the same gain.

The shift in time could be caused by a timer, or the second reduction may be provided in response to the frequency of the utility grid exceeding a second threshold value.

The second threshold is different from the first threshold, whereby the shift in time is obtained by the time it takes for the grid frequency to change from the first to the second threshold which again depends on the balance between consumption and production. This would have the advantage that the second reduction takes into account the effect of the first reduction.

If the shift in time is caused by a second threshold different from the first threshold, the wind turbines in the cluster may operate autonomously and yet each contribute to a common control strategy which both counteract unbalance in the frequency and prevents large abrupt changes to the power production. This can be carried out without any communication between the autonomous wind turbines since each wind turbine may reach on its own threshold pre-defined in the controller of the wind turbine.

The first and second reduced power levels could be different or they could be identical.

Identical reduced power levels are simple and provide an easy measure for prediction of the impact when calculating with many wind turbines in a large cluster. On the other hand, it may be an advantage to de-rate different wind turbines differently, e.g. if they are in different wind conditions or if they have different rated, nominal, power output.

The wind turbines have a minimum power output, and the first and/or the second reduced power is the minimum power output for the first or second wind turbine, respectively. The minimum power output typically depends on the wind speed. In one embodiment, the first and/or the second reduced power is a fixed value which does not depend on wind or other factors, and it could e.g. be specified based on the minimum power output for a given wind speed.

The reduction may also be determined as a percentage of a reference production. The present power production may form this reference point such that the present production is reduced by a factor, e.g. by 25 pct. The un-curtailed production may alternatively form the reference point, e.g. such that the production is reduced by a factor of 25 pct. relative to the nominal power production of the turbine in question.

At least one of the first reduced power level, the second reduced power level, or the third reduced power level could be ramp rate limited which means that the change from one power level to another power level is carried out in successive small steps until the new power level is achieved.

At least one of the first reduced power level, the second reduced power level, or a third reduced power level may be determined based on a wind speed. This may e.g. be a stepwise adaption of reduced power level for different ranges of wind speed, or it could be a continuous adaption of the level of the reduced power depending on the actual wind speed. In one example, the first reduced power level may have one relatively low value for wind speeds up to 15 m/s and a higher reduced power level for wind speeds above 15 m/s. In that way, a higher counterforce from the generator on the drive train is provided for higher wind speed which may support balance in the drive train during high wind speeds.

In another example, the first reduced power level is a result of a function including the wind speed. This function could e.g. be:

$$\frac{a}{z} + x * v$$

where a is a present power level provided by the wind turbine, z and x are constants and v is the wind speed.

In another example, only the minimum power output depends on the wind speed, i.e. the wind speed specifies a lowest power level which can be provided by the reduction.

A further step of providing at a third point in time, t3, at least one further reduction by which delivery from the first or second wind turbine is reduced to a third power level, may be introduced. Accordingly, each of the wind turbines in the cluster may be de-rated sequentially to several different levels of power. In one example, the first wind turbine is reduced to the first power level upon exceeding a first threshold value of the frequency, and subsequently to a third, lower, power level, e.g. in response to the first threshold value continuously being exceeded or in response to a third threshold for the frequency being subsequently exceeded. The method may further comprise the step of, at the first point in time, t1, delivering power from at least one other wind turbine without introducing corrections based on the frequency of the utility grid. Accordingly, one or more of the wind turbines of the utility grid may be reduced completely independently on the operation of other wind turbines of the utility grid. I.e. the other wind turbines may continue operation completely unaffected by the reduction carried out for one or more of the affected wind turbines of the cluster.

The method may comprise the further step of providing, at a fourth point in time, t4, a first increase by which delivery from at least one of the first and second wind turbines is increased, the first increase being provided in response to the frequency of the utility grid surpassing the first threshold value. In that way, each wind turbine for which a reduction is provided, may return to normal operation once the balance is re-established and a desired frequency, e.g. the rated frequency, is achieved. The normal power production may be re-established stepwise to avoid abrupt increases in the power production.

The method is until now described relative to a first and a second wind turbine of the cluster of wind turbines. The method may apply to any number of wind turbines in the cluster, i.e. a first, a second, a third, a fourth, a fifth etc. wind turbine, and particularly, each wind turbine may be associated with a unique threshold value for the frequency at which a reduction for that wind turbine is provided. In that way, all wind turbines in the cluster becomes unique and self-controlling, and at the same time, very large and sudden changes are avoided since each wind turbine reacts on different thresholds.

In a second aspect, a controller for controlling operation of at least two wind turbines in a cluster of wind turbines is provided. The controller is configured to control each of the two wind turbines individually and in accordance with the method of the first aspect described above. The controller may particularly be installed locally in each wind turbine, at it may particularly be configured to operate autonomously. Particularly, the controller of each wind turbine or for a group of wind turbines in the cluster of wind turbines may include controllers with one pre-stored threshold for the frequency at which the reduction is provided. As an alternative to autonomous operation, the controllers may be joined in a communication network e.g. including a central server controller which controls all wind turbines or selected wind turbines of the cluster.

In a third aspect, a wind turbine in a cluster of wind turbines is provided. The wind turbine includes a controller according to the second aspect, e.g. a controller with a pre-stored threshold value for the frequency at which the wind turbine is considered to reduce the power level.

DESCRIPTION OF EMBODIMENTS

Embodiments of the invention will in the following be described with reference to the drawing in which:

Fig. 1 illustrates a large modem wind turbine including three wind turbine blades in the wind turbine rotor;

Fig. 2 illustrates schematically the electrical interconnection of one cluster of wind parks connected to a utility grid;

Figs. 3-8 illustrate different simulations including results of power reduction for different frequencies of a 50 Hz utility grid; and

Fig. 9 illustrates the ratio between wind speed and minimum power output.

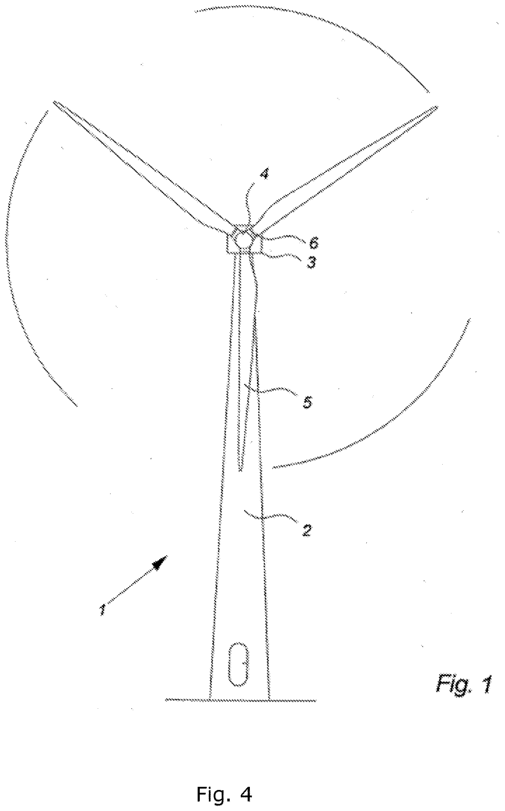

Fig. 1 illustrates a modern wind turbine 1 with a tower 2 and a wind turbine nacelle 3 positioned on top of the tower. The wind turbine rotor, comprising at least one blade such as three wind turbine blades 5 as illustrated, is connected to the hub 4 through pitch mechanisms 6. Each pitch mechanism includes a blade bearing and pitch actuating means which allows the blade to pitch. The pitch process is controlled by a pitch controller.

It is required from grid codes that wind turbines 1 connected to a utility grid 7 contribute to frequency control during an event where the frequency of the utility grid increases. More specific the wind turbines 1 are required to reduce power generation when the frequency exceeds a predetermined level defined by grid operators.

The reduction in power generation is done by providing reduction in power level for individual wind turbines.

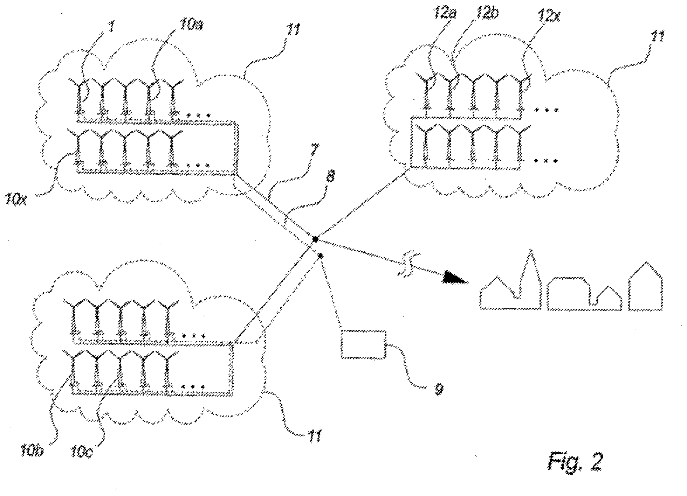

Fig. 2 illustrates schematically a cluster of wind turbines 1, 10a, 10b,... 10x, 12 connected to a distributed utility grid 7.

If the utility grid 7 experiences an increase in frequency exceeding said predetermined frequency threshold defined by e.g. a grid operator, a number of wind turbines 1, 10a, 10b,... 10x, 12 must provide a reduction in power level.

According to one embodiment of the invention each individual wind turbine 12a, 12b,...12x in a cluster of wind turbines comprises a controller which is programmed to provide the reduction. The surveillance of the frequency of the utility grid may include the step of continuously comparing acquired information about grid frequency with a stored predefined frequency threshold value. This may be done for one, two, three or multiple wind turbines, but it is done individually for each wind turbine by the control means in said individual wind turbine 12a, 12b,... 12x.

The controllers operate completely independently, and no communication from a central controller or from other wind turbines of the utility grid is necessary. Each controller is configured to provide a reduction by which delivery from the wind turbine is reduced from whatever power level is presently produced to a reduced power level. This reduction is triggered by a frequency of the utility grid exceeding a threshold value which is programmed into the controller. The controller survey the frequency of the utility grid, e.g. by receiving information from a separate sensor or by communicating with a switch gear or similar device connected between the wind turbine and the grid.

Once the wind turbine controller triggers the reduction, the wind turbine is allowed to continue in operation while it produces a reduced power output to the utility grid. This allows the wind turbine to remain operational with heated lubrication oil and reinstatement of the wind turbine in normal, non-reduced power output can be carried out swiftly.

As an alternative to completely independent local controllers, the controller and wind turbine may also be connected to a central control system. From this central system, the controller may receive control parameter including but not limited to:

• the frequency of the utility grid;
• the threshold value for when to reduce the power level;
• the reduced power level;
• the threshold for when to return to normal operation without power reduction;

or the controller may simply receive from the central control system

- instructions to reduce the power level;
- the level to which the power is reduced; and
- instructions to increase to normal operation.

In such an alternative embodiment, one central control means 9 could be connected to a plurality of wind turbines or all wind turbines of the cluster of wind turbines.

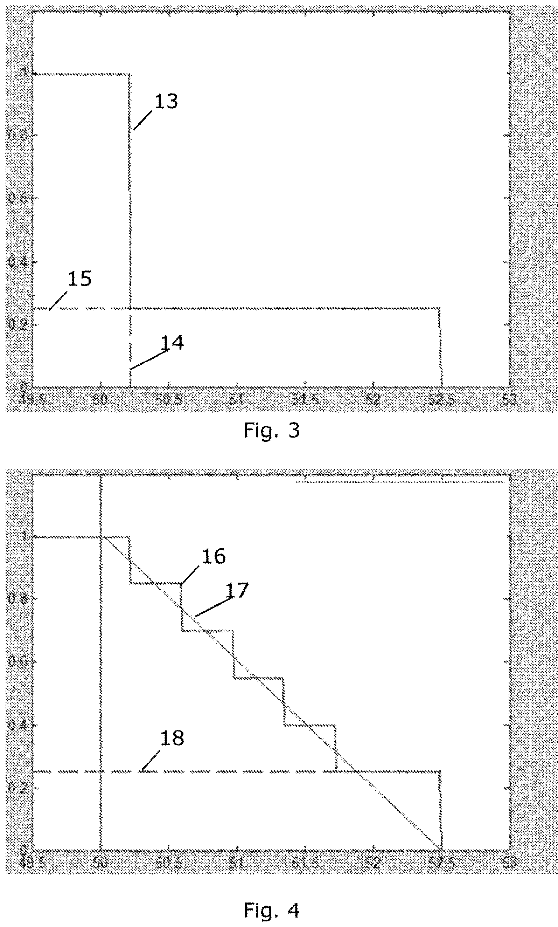

Fig. 3 illustrates power/frequency relation for the controller. For frequencies below the threshold value no power reduction is imposed. For frequencies above the threshold value the power production is reduced, e.g. to technical minimum which is typical 10-25% of rated power for a wind turbine. In Fig. 3, the abscissa indicates the frequency and the ordinate indicates the wind turbine power (PU). 13 is a static power/frequency relation, 14 is a frequency threshold, and 15 is a technical minimum power (PU) for the wind turbine.

The controllers of different wind turbines may have different predefined and programmed frequency threshold values such that they do not reduce power simultaneously. For small frequency increases only few turbines will reduce power while all turbines will reduce power for larger frequency increases.

For example, consider a park of 5 turbines on a 50 Hz utility grid, where all 5 wind turbines have technical minimum of 25% of rated power. Using the thresholds values

- Threshold value for WTG #1 : 50.2 Hz
- Threshold value for WTG #2 : 50.6 Hz
- Threshold value for WTG #3 : 51.0 Hz
- Threshold value for WTG #4 : 51.3 Hz
- Threshold value for WTG #5 : 51.7 Hz

This will give the frequency control response curve on plant level illustrated in Fig. 4. In Fig. 4, the abscissa indicates the frequency and the ordinate indicates the wind turbine power (PU). 16 is a method according to this invention, 17 is an alternative, more complicated, continuous change in effect as a function of frequency, and 18 is a technical minimum power for the wind turbine.

The above suggestion will require that all turbines are configured differently. This makes maintenance complicated. Alternatively, the plant-level parameters (red line) could be implemented in each turbine and each turbine performs a random selection of its threshold value (uniformly distributed between the minimum frequency and the maximum frequency). They only need to do this once, for instance, at commissioning. The accuracy of this solution will vary with the number of turbines. For smaller sites the accuracy will vary much but for larger parks the randomness will smooth out and the performance will probably be acceptable.

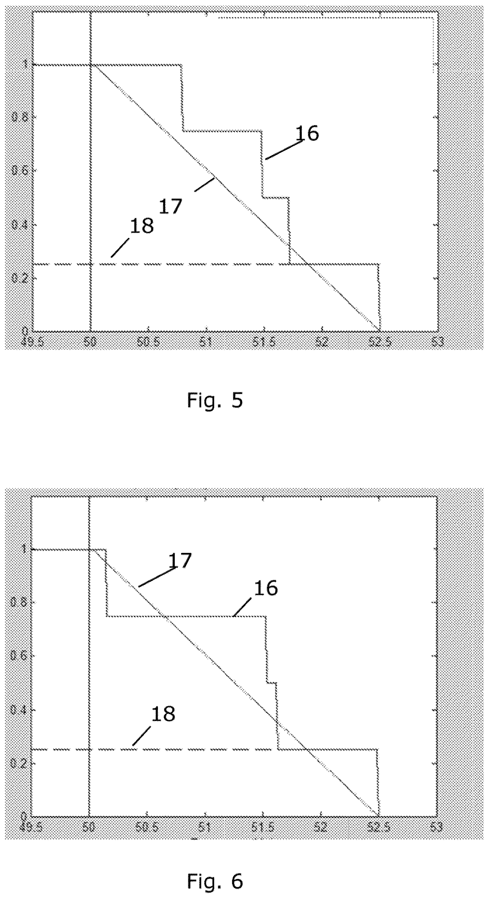

Figs. 5 and 6 illustrate two examples of the resulting Power/frequency on plant level for a site with 3 turbines. In Figs. 5 and 6, the abscissa indicates the frequency and the ordinate indicates the wind turbine power (PU). 16 is a method according to this invention in the embodiment where each turbine performs a random selection of threshold value, 17 is an alternative, more complicated, continuous change in effect as a function of frequency, and 18 is a technical minimum power for the wind turbine.

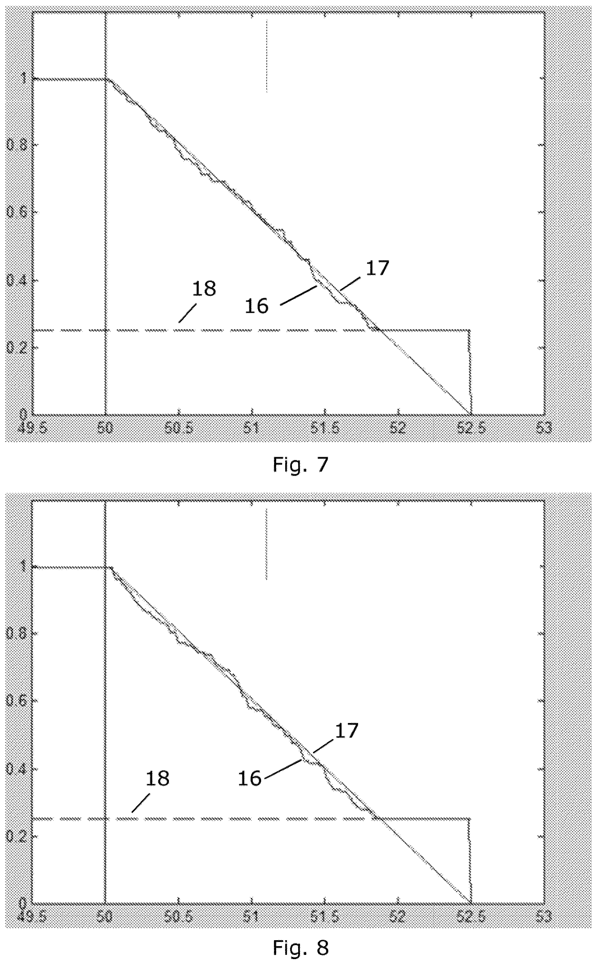

Fig. 7 and 8 illustrate two examples of the resulting Power/frequency on plant level for a site with 100 turbines. In Figs. 7 and 8, the abscissa indicates the frequency and the ordinate indicates the wind turbine power (PU). 16 is a method according to this invention in the embodiment where each turbine performs a random selection of threshold value, 17 is an alternative, more complicated, continuous change in effect as a function of frequency, and 18 is a technical minimum power for the wind turbine. In this example which is carried out with 100 wind turbines, it is particularly interesting that the control according to the invention, c.f. graph no. 16 is close to the much more complicated continuous control principle illustrated by graph no. 17.

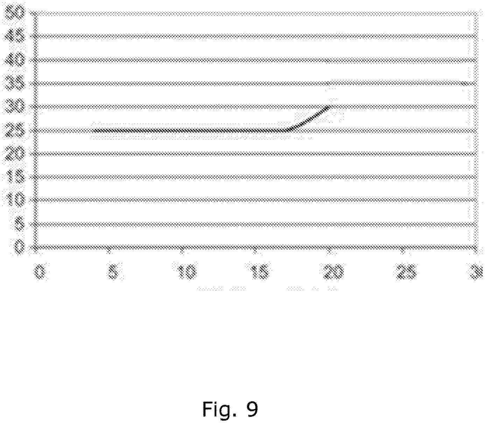

Fig. 9 illustrates a ratio between wind speed and minimum power output. In this example, it is illustrated that the power provided by the reduction is maintained above a minimum level and that this minimum level may depend on the wind speed. In the illustration, the abscissa indicates the wind speed and the ordinate indicates the minimum wind turbine power in percentage of a rated power for the wind turbine. When the wind speed increases above 18 m/s, the minimum power output increases.

List of entities in the drawings

   1. Wind turbine
   2. Tower
   3. Nacelle
   4. Hub
   5. Rotor blade
   6. Pitch mechanism
   7. Utility grid
   8. Data communication network
   9. Frequency and/or central control means
   10. 10a,b..x Wind turbines in a cluster of wind turbines with central detection and/or control as an alternative to completely autonomous control
   11. Wind park with a plurality of wind turbines;
   12. 12a,b...x Wind turbines without central detection and/or control operating autonomously based on threshold values predefined in the controller.

**Claims**

**1.** A method for controlling wind turbines in a cluster of wind turbines, where each wind turbine is controlled individually and where each wind turbine is configured to deliver power to the same utility grid having a rated frequency, the method comprising the steps of:

- providing at a first point in time, t1, a first reduction by which delivery from a first wind turbine in the cluster of wind turbines is reduced from a present power level to a first reduced power level, the first reduction being provided in response to an initial frequency of the utility grid exceeding a first threshold value; and
- continuing delivering power from the first wind turbine at the first reduced power level while the initial frequency exceeds the first threshold value,
- providing, at a second point in time, t2, a second reduction by which delivery from a second wind turbine in the cluster of wind turbines is reduced from a present power level to a second reduced power level,
wherein t2 is later than t1, and the second reduction is thereby shifted in time relative to the first reduction, wherein the second reduction is provided in response to the frequency of the utility grid exceeding a second threshold value, and wherein the first and second threshold values are different, wherein at least one of the first and second reduction reduces to a power level independent on the frequency of the utility grid, wherein the first and second first reduced power level is a technical minimum power for the wind turbine.

2. A method according to claim 1, further comprising the step of

- providing at a third point in time, t3, at least one further reduction by which delivery from the first or second wind turbine is reduced to a third power level.

3. A method according to any of the preceding claims, further comprising the step of, at the first point in time, t1, delivering power from at least one other wind turbine without introducing corrections based on the frequency of the utility grid.

4. A method according to any of the preceding claims, further comprising the step of:

- providing at a fourth point in time, t4, a first increase by which delivery from at least one of the first and second wind turbines is increased, the first increase being provided in response to the frequency of the utility grid surpassing the first threshold value.

5. A controller for controlling operation of at least two wind turbines in a cluster of wind turbines, the controller being configured to control each of the two wind turbines individually and in accordance with the method of claims 1-4.

6. A controller according to claim 5, configured to control without communication to other controllers of a cluster of wind turbines.

7. A wind turbine cluster comprising a plurality of wind turbines, at least two of which being controlled by a controller according to claim 5 or 6.

**Patentansprüche**

1. Verfahren zum Steuern von Windkraftanlagen in einer Gruppe von Windkraftanlagen, wobei jede Windkraftanlage einzeln gesteuert wird und wobei jede Windkraftanlage so konfiguriert ist, dass sie Leistung mit einer Nennfrequenz an dasselbe Energieversorgungsnetz abgibt, wobei das Verfahren die folgenden Schritte umfasst:

- Bereitstellen, zu einem ersten Zeitpunkt, t1, einer ersten Reduzierung, um die Abgabe von einer ersten Windkraftanlage in der Gruppe von Windkraftanlagen von einem aktuellen Leistungsniveau auf ein erstes reduziertes Leistungsniveau reduziert wird, wobei die erste Reduzierung als Reaktion darauf bereitgestellt wird, dass eine Anfangsfrequenz des Energieversorgungsnetzes einen ersten Schwellenwert überschreitet; und
- Fortsetzen der Abgabe von Leistung von der ersten Windkraftanlage auf dem ersten reduzierten Leistungsniveau, während die Anfangsfrequenz den ersten Schwellenwert überschreitet,
- Bereitstellen, zu einem zweiten Zeitpunkt, t2, einer zweiten Reduzierung, um die Abgabe von einer zweiten Windkraftanlage in der Gruppe von Windkraftanlagen von einem aktuellen Leistungsniveau auf ein zweites reduziertes Leistungsniveau reduziert wird,
wobei t2 später als t1 ist und die zweite Reduzierung dadurch zeitlich relativ zu der ersten Reduzierung verschoben ist, wobei die zweite Reduzierung als Reaktion darauf bereitgestellt wird, dass die Frequenz des Energieversorgungsnetzes einen zweiten Schwellenwert überschreitet, und wobei der erste und der zweite Schwellenwert unterschiedlich sind, wobei mindestens eine der ersten und der zweiten Reduzierung auf ein Leistungsniveau reduziert, das unabhängig von der Frequenz des Energieversorgungsnetzes ist,

wobei das erste und zweite erste reduzierte Leistungsniveau eine technische Mindestleistung für die Windkraftanlage ist.

2. Verfahren nach Anspruch 1, weiter umfassend den Schritt von

- Bereitstellen, zu einem dritten Zeitpunkt, t3, mindestens einer weiteren Reduzierung, um die Abgabe der ersten oder der zweiten Windkraftanlage auf ein drittes Leistungsniveau reduziert wird.

3. Verfahren nach einem der vorstehenden Ansprüche, das weiter den Schritt, zu dem ersten Zeitpunkt, t1, vom Abgeben von Leistung von mindestens einer anderen Windkraftanlage umfasst, ohne Korrekturen basierend auf der Frequenz des Energieversorgungsnetzes vorzunehmen.

4. Verfahren nach einem der vorstehenden Ansprüche, weiter umfassend den Schritt von:

- Bereitstellen, zu einem vierten Zeitpunkt, t4, einer ersten Erhöhung, um die Abgabe von mindestens einer der ersten und der zweiten Windkraftanlage erhöht wird, wobei die erste Erhöhung als Reaktion darauf bereitgestellt wird, dass die Frequenz des Energieversorgungsnetzes den ersten Schwellenwert überschreitet.

5. Steuereinheit zum Steuern des Betriebs von mindestens zwei Windkraftanlagen in einer Gruppe von Windkraftanlagen, wobei die Steuereinheit so konfiguriert ist, dass sie jede der beiden Windkraftanlagen einzeln und gemäß dem Verfahren der Ansprüche 1-4 steuert.

6. Steuereinheit nach Anspruch 5, die zum Steuern ohne Kommunikation mit anderen Steuereinheiten einer Gruppe von Windkraftanlagen konfiguriert ist.

7. Windkraftanlagengruppe, die eine Vielzahl von Windkraftanlagen umfasst, von denen mindestens zwei durch eine Steuereinheit nach Anspruch 5 oder 6 gesteuert werden.

**Revendications**

1. Procédé de commande d'éoliennes d'un groupe d'éoliennes, où chaque éolienne est commandée individuellement et où chaque éolienne est configurée pour fournir de la puissance au même réseau de distribution présentant une fréquence nominale, le procédé comprenant les étapes consistant à :

- fournir à un premier instant, t1, une première réduction par laquelle la fourniture depuis une première éolienne du groupe d'éoliennes est réduite d'un niveau de puissance actuel à un premier niveau de puissance réduit, la première réduction étant fournie en réponse à une fréquence initiale du réseau de distribution dépassant une première valeur seuil ; et
- continuer à fournir de la puissance depuis la première éolienne au premier niveau de puissance réduit alors que la fréquence initiale dépasse la première valeur seuil,
- fournir, à un deuxième instant, t2, une seconde réduction par laquelle la fourniture depuis une deuxième éolienne du groupe d'éoliennes est réduite d'un niveau de puissance actuel à un deuxième niveau de puissance réduit,
dans lequel t2 est postérieur à t1, et la deuxième réduction est ainsi décalée dans le temps par rapport à la première réduction, dans lequel la deuxième réduction est fournie en réponse à la fréquence du réseau de distribution dépassant une deuxième valeur seuil, et dans lequel les première et deuxième valeurs seuils sont différentes, dans lequel au moins l'une des première et deuxième réductions réduit à un niveau de puissance indépendant de la fréquence du réseau de distribution,
dans lequel les premier et deuxième niveaux de puissance réduits sont une puissance technique minimale pour l'éolienne.

2. Procédé selon la revendication 1, comprenant en outre l'étape consistant à

- fournir à un troisième instant, t3, au moins une réduction supplémentaire par laquelle la fourniture depuis la première ou deuxième éolienne est réduite à un troisième niveau de puissance.

3. Procédé selon l'une quelconque des revendications précédentes, comprenant en outre l'étape consistant à, au premier instant, t1, fournir de la puissance depuis au moins une autre éolienne sans introduire de corrections basées sur la fréquence du réseau de distribution.

4. Procédé selon l'une quelconque des revendications précédentes, comprenant en outre l'étape consistant à :

- fournir à un quatrième instant, t4, une première augmentation par laquelle la fourniture depuis au moins l'une des première et deuxième éoliennes est augmentée, la première augmentation étant fournie en réponse à la fréquence du réseau de distribution dépassant la première valeur seuil.

**5.** Dispositif de commande pour commander le fonctionnement d'au moins deux éoliennes d'un groupe d'éoliennes, le dispositif de commande étant configuré pour commander chacune des deux éoliennes individuellement et conformément au procédé selon les revendications 1-4.

**6.** Dispositif de commande selon la revendication 5, configuré pour commander sans communication avec d'autres dispositifs de commande d'un groupe d'éoliennes.

**7.** Groupe d'éoliennes comprenant une pluralité d'éoliennes, dont au moins deux sont commandées par un dispositif de commande selon la revendication 5 ou 6.

Fig. 1

Fig. 4

Fig. 2

Fig. 3

Fig. 4

Fig. 5

Fig. 6

Fig. 7

Fig. 8

Fig. 9

**EP 3 545 190 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 208213281 A
- EP 2884096 A1
- US 2011012352 A1